Europäisches Patentamt

European Patent Office

Office européen des brevets

(11) Veröffentlichungsnummer: **0 115 608**
**A1**

(12) ## EUROPÄISCHE PATENTANMELDUNG

(21) Anmeldenummer: **83112697.4**

(22) Anmeldetag: **16.12.83**

(51) Int. Cl.³: **A 01 F 15/00**

(30) Priorität: **17.12.82 AU 7327/82**

(43) Veröffentlichungstag der Anmeldung: **15.08.84**
**Patentblatt 84/33**

(84) Benannte Vertragsstaaten: **AT CH DE FR GB LI NL**

(71) Anmelder: **Klöckner-Humboldt-Deutz AG**
**Zweigniederlassung Fahr, D-7702 Gottmadingen (DE)**

(72) Erfinder: **Webb, Dennis L., LOT 149 A MT Riddell Road**
**Healesville, 3777, Victoria (AU)**
Erfinder: **Webb, Sonja E., LOT 149 A MT Riddell Road**
**Healesville, 3777, Victoria (AU)**

(74) Vertreter: **Haft, Berngruber, Czybulka,**
**Hans-Sachs-Strasse 5, D-8000 München 5 (DE)**

(54) **Rundballenpresse.**

(57) Die Rundballenpresse für landwirtschaftliches Halmgut weist eine Aufnahmevorrichtung (11) für das geschnittene Halmgut, eine Vorkammer (10) und eine sich daran anschließende Bindekammer (12) auf, die mit einer Bindevorrichtung und einer Auswurfvorrichtung für den fertigen Rundballen versehen ist. Die Vorkammer (10) ist entlang ihres Umfangs mit einer sich quer zur Fahrtrichtung der Rundballenpresse erstreckenden Rollvorrichtung zur Formung eines Vorballens versehen, während zwischen der Vorkammer (10) und der Bindekammer (12) eine im wesentlichen senkrecht nach oben verschiebbare Trennwand (15) vorgesehen ist, die Teil der Rollvorrichtung ist. Der Boden der Vorkammer (10) und der Bindekammer (12) wird durch ein gemeinsames Förderband (14) gebildet.

0115608

Die vorliegende Erfindung betrifft eine Rundballenpresse für landwirtschaftliches Halmgut gemäß dem Oberbegriff des Anspruchs 1.

Bekannte Rundballenpressen können in verschiedenen Ausführungsformen hergestellt sein. So gibt es Rundballenpressen mit einer feststehenden, an die Ballenform angepaßten Preßkammer, an deren Umfang mehrere aneinandergereihte Förderelemente vorgesehen sind. Diese Förderelemente können dabei entweder als Förderwalzen ausgebildet sein, deren Achsen etwa parallel zur Mittelachse der Preßkammer angeordnet sind und die über Ketten angetrieben werden oder aber sie können als Förderbänder ausgestaltet sein, von denen eine Vielzahl in Form von Endlosbändern entlang des Umfangs der Preßkammer angeordnet sind. Geschnittenes Halmgut, wie z. B. Heu oder Stroh wird durch eine Aufnahmevorrichtung am vorderen Ende der Rundballenpresse aufgenommen und z. B. über eine Förderanordnung in die Preßkammer eingeführt, in der es spiralförmig aufgewickelt wird, wobei der Ballen von außen nach innen gewickelt und dadurch geformt wird unter Ausübung eines Kompressionsdrucks auf das zu wickelnde Halmgut. Nach dem fertigen Aufrollen und dem Binden des Ballens wird dieser am rückwärtigen Ende der Rundballenpresse durch eine entsprechende Ausstoßöffnung abgelegt.

Aus der DE-OS 27 40 299 ist eine Ballenpresse für landwirtschaftliche Halmgüter mit einem Preßraum bekannt, der
das vom Boden aufgenommene und durch eine Einlaßöffnung eingegebene Erntegut während der Sammelfahrt verdichtet, gegebenenfalls bindet und in Form von Ballen durch eine Auslaßöffnung nach hinten abgibt und mit einer zumindest während
der Abgabe des Ballens vorhandenen Vorkammer zur zwischenzeitlichen Speicherung des vom Boden aufgenommenen Erntegutes
während der Ballenabgabe, wobei die Vorkammer vor der Einlaßöffnung des Preßraums fest vorgesehen ist und durch eine
während des Bindens, zumindest aber während der Ballenabgabe,
abschaltbaren Fördereinrichtung mit der Einlaßöffnung des
Preßraums verbunden ist.

In der Vorkammer ist dabei ein Erntegutniederhalter vorgesehen, der durch eine nach oben in Förderrichtung schwenkbare Platte gebildet ist, wobei die der Schwenkachse abgewandte freie Kante der Platte am Eingang zur Vorkammer an
einem Anschlag unter einem größeren Abstand vom Boden der
Vorkammer aufliegt, als der, unter dem die Schwenkachse vom
Boden angeordnet ist und wobei die Schwenkachse der Einlaßöffnung des Preßraums benachbart ist.

Erforderlich ist dazu noch eine elastische Einrichtung zum
Niederdrücken des Niederhalters, wobei mit dieser Ausgestaltung bereits der Vorteil erzielt worden ist, daß bei
Einsammeln des Erntegutes eine kontinuierliche Ballenbildung ohne Anhalten der Rundballenpresse möglich ist.

Die dabei vorgesehene Vorkammer erlaubt zwar eine ununterbrochene Zuführung des Erntegutes, während der fertige Rundballen durch eine Bindeeinrichtung umschnürt und der Ballen
ausgestoßen wird. Jedoch ist es noch erforderlich, daß während des Bindens und Ausstoßens die die Vorkammer mit der
Einlaßöffnung der Ballenpresse verbindende Fördereinrichtung
abgeschaltet wird, so daß das vom Boden aufgenommene Erntegut in der Vorkammer gespeichert wird. Erst nach Beendigung
des Ausstoßvorgangs des fertigen Ballens wird die Fördereinrichtung wieder in Betrieb genommen und das in der Vorkammer
angesammelte Erntegut in die Ballenpresse geleitet.

Bei einer andersartigen Ausführungsform von Rundballenpressen
ist eine bewegliche Kammer mit einem endlosen Förderband vorgesehen, das einen gegenüber der Einführvorrichtung vorgesehenen Hohlraum bildet, der sich beim Aufwickeln des Rundballens
zunehmend vergrößert, wozu eine Vielzahl von beweglichen Riemenscheiben, die mit hydraulisch gesteuerten Hebeln verbunden
sind, erforderlich ist, um sich so dem langsam zunehmenden
Volumen des zu bildenden Rundballens anzupassen.

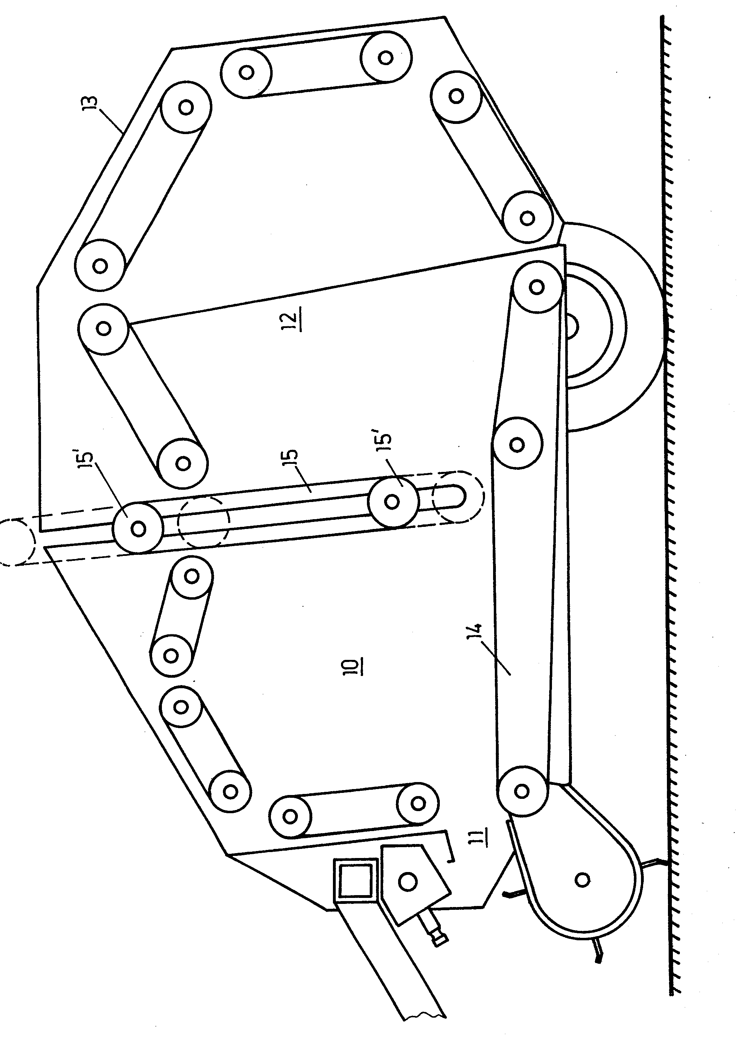

Eine derartige Rundballenformmaschine ist aus der DE-OS
27 05 515 bekannt, wobei gemäß den in den Figuren 17 bis 24
dargestellten Ausführungsbeispielen eine Vielzahl von Steuerteilen, Rollen und Hebel    erforderlich sind, um einen
Rundballen herzustellen. Das in einem Schwad auf den Boden
abgelegte Erntegut wird durch eine Aufnehmeeinheit auf ein
unteres Förderband abgelegt, das das Erntegut durch eine vordere offene Kammer in eine rückwärtige Kammer bis an deren geschlossenes rückwärtiges Ende bewegt. In dieser Kammer bewegen der obere Trum eines ersten Förderbandes und der untere Trum eines anderen Förderbandes das herankommende Erntegut in entgegengesetzten Richtungen, so daß es zu einer Rolle zusammengewickelt wird. Nach Fertigstellung des Rundballens erfolgt ein Schließen des rückwärtigen Endes der vorderen Kammer, um so die Bildung eines erneuten Ballenkerns in der vorderen Kammer zwischen dem rückwärtslaufenden oberen Trum des unteren Förderbandes und dem vorwärtslaufenden unteren Trum des oberen Förderbandes einzuleiten. Zur Überführung des Rundballenkerns aus der vorderen Kammer in die hintere Kammer ist das hintere Ende der vorderen Kammer zu öffnen, indem die Schwenkeinrichtung zum Zusammenlegen und Auffalten des oberen Förderbandes zu einer Drehung im Gegenuhrzeigersinn bis zu einer Stelle veranlaßt wird, an der ein Riegel über die Höhe eines Ansatzes eines Gleitschlittens angehoben wird, so daß dieser frei kommt und zurückzubewegen ist, bis eine Rolle ihre Raststellung erreicht. Durch Rückwärtsbewegung einer Gleitschiene gelangt ein Steuerventilschieber in seine innere Stellung und veranlaßt eine Einfahrbewegung eines Zylinders für die Öffnungs- und Schließeinrichtung der vorderen Kammer unter gleichzeitiger Bewegung eines Schwenkarmes und von Bodenrampen nach unten, um die Antriebsbewegung des oberen Förderbandes anzuhalten.

Ein derartiger Aufbau ist kompliziert, störanfällig und teuer in der Herstellung.

Aufgabe der vorliegenden Erfindung ist es, eine Rundballenpresse zu schaffen, die nicht nur in der Lage ist, beim Einsammeln des Halmgutes eine kontinuierliche Ballenbildung ohne Anhalten der Rundballenpresse zu ermöglichen, sondern die auch besonders einfach und robust aufgebaut ist und dadurch billig in der Herstellung ist und frei von Störungen arbeitet.

Ausgehend von einer Rundballenpresse der eingangs näher genannten Art erfolgt die Lösung dieser Aufgabe mit den im kennzeichnenden Teil des Anspruchs 1 angegebenen Merkmalen; vorteilhafte Weiterbildungen sind in den Unteransprüchen beschrieben.

Mit der erfindungsgemäßen Rundballenpresse ist es also möglich, auf einfache und wirtschaftliche Art einen Rundballen nach seiner Formung zu binden und auszustoßen, ohne daß die Rundballenpresse angehalten werden muß, da während des Binde- und Ausstoßvorgangs die Vorkammer weiterhin mit aufgenommenem Halmgut gefüllt wird und in dieser eine Vorformung des Ballens erfolgt. Sofern die Bindekammer aufnahmebereit ist, wird die Trennwand zwischen den beiden Kammern soweit verschoben, daß der Rundballen in die Bindekammer eingegeben werden kann. Während des Bindevorgangs trennt die Trennwand die beiden Kammern voneinander, so daß die von der Aufnahmevorrichtung angelieferten Halmgüter in der Vorkammer zu einem Ballenkern geformt werden.

Als Rollvorrichtungen kommen dafür sowohl endlose flexible
Bänder in Frage, die um zwei Walzen laufen, als auch eine
Vielzahl nebeneinander angeordneter Preßwalzen.

Die Erfindung wird im folgenden anhand des in der einzigen
Figur dargestellten Ausführungsbeispiels näher erläutert.

Bei der schematischen Darstellung eines Längsschnitts durch
eine erfindungsgemäße Rundballenpresse ist mit 11 der in
Fahrtrichtung der Maschine gesehen vorne liegende Einzugsspalt für das Halmgut bezeichnet, das durch die darunter
angeordnete, schematisch dargestellte Aufnahmevorrichtung in
die Vorkammer 10 eingegeben wird. Die Vorkammer 10 ist etwas
kleiner ausgestaltet, als die sich daran anschließende Bindekammer 12, die mit einer schwenkbaren Klappe 13 zum Ausstoßen
des fertig gerollten Rundballens versehen ist. Zu diesem Zweck
kann die Klappe 13 um ein nicht näher dargestelltes Gelenk
nach oben verschwenkt werden, so daß der Ballen nach unten
auf den Boden abgegeben wird. Mit 14 ist ein beiden Kammer
gemeinsames Förderband bezeichnet und mit 15 eine die Vorkammer 10 von der Bindekammer 12 abteilende Trennwand. Beide
Kammern sind, wie schematisch dargestellt, mit Rollvorrichtungen versehen, die im gewählten Ausführungsbeispiel als
flexible, endlose, um jeweils zwei Walzen verlaufende Bänder bestehen, die entlang des Kammerumfangs angeordnet sind, wobei sich die Achsen der Walzen quer zur Fahrtrichtung der Maschine erstrecken.

Die Trennwand 15, welche die beiden Kammern trennt, besteht im gewählten Ausführungsbeispiel aus zwei Walzen 15', 15'', um welche ein endloses Band läuft. Die Trennwand 15 kann in ihrer Gesamtheit nach oben verschoben werden, so daß ein in der Vorkammer 10 gebildeter Ballen in die Bindekammer 12 eingegeben werden kann unter Einwirkung des beiden Kammern gemeinsamen Förderbandes 14. Die im wesentlichen in senkrechter Richtung verschiebbare Trennwand 15 trennt also in gewissen Zeitabständen die beiden Kammern voneinander, wobei die Trennwand in ihrer unteren Trennstellung der Ballenformung entspricht und in ihrer nach oben verschobenen Stellung der Bindestellung für den Ballen entspricht. Während des Betriebes wird Halmgut in die Vorkammer 10 und in die Bindekammer 12 eingeführt, wonach in der unteren Trennstellung der Trennwand 15 und nach Ausbildung des Rundballens in der Bindekammer 12 in der maximalen Größe eine nicht näher dargestellte Bindevorrichtung den Ballen bindet, wobei eine Anzahl von nicht dargestellten Abweisfingern das durch die Einlaßöffnung 11 eintretende Halmgut in die Vorkammer 10 ablenkt. Dort wird das eintretende Halmgut zu einem Vorballen verarbeitet, während der Rundballen in der rückwärtigen Bindekammer 12 gebunden und ausgestoßen wird, ohne daß die Rundballenpresse ihre Bewegung unterbricht. Wenn nun nach dem Ausstoßen des Ballens die Klappe 13 geschlossen wird, werden  sowohl die Trennwand 15 als auch die Abweisfinger nach oben verschoben, so daß das in der Vorkammer 10 angesammelte Halmgut in die Bindekammer 12 gelangt und der Arbeitszyklus wiederholt wird, ohne daß die Rundballenpresse angehalten werden muß.

0115608

11077

Klöckner-Humboldt-Deutz

Zweigniederlassung Fahr

7702 Gottmadingen

Rundballenpresse

Patentansprüche

1. Rundballenpresse für landwirtschaftliches Halmgut mit
einer Aufnahmevorrichtung für das geschnittene Halmgut,
einer Vorkammer für das aufgenommene Halmgut und einer
sich daran anschließenden Bindekammer, die mit einer
Bindevorrichtung und einer Auswurfvorrichtung für den
fertigen Rundballen versehen ist, dadurch gekennzeichnet, daß die Vorkammer (10) entlang ihres Umfangs mit
einer sich quer zur Fahrtrichtung der Rundballenpresse
erstreckenden Rollvorrichtung zur Formung eines Vorballens versehen ist, daß zwischen der Vorkammer (10)
und der Bindekammer (12) eine im wesentlichen senkrecht
nach oben verschiebbare Trennwand (15) vorgesehen ist
und daß der Boden der Vorkammer (10) und der Bindekammer (12)
durch ein gemeinsames Förderband (14) gebildet wird.

2. Rundballenpresse nach Anspruch 1, dadurch gekennzeichnet, daß die Trennwand (15) aus einem Teil der Rollvorrichtung besteht, die beiden Kammern gemeinsam ist und in jeder Kammer in entgegengesetzter Richtung auf den zu bildenden Ballen einwirkt.

3. Rundballenpresse nach Ansprüchen 1 und 2, dadurch gekennzeichnet, daß die Trennwand aus einem flexiblen, endlosen, um zwei Walzen verlaufenden Gurt besteht.

4. Rundballenpresse nach Ansprüchen 1 und 2, dadurch gekenzeichnet, daß die Trennwand aus einer Vielzahl nebeneinander gelagerter, sich quer zur Fahrtrichtung der Rundballenpresse erstreckender und angetriebener Walzen besteht.

1/1

15'

13

15

12

10

15'

11

14

0115608

Europäisches
Patentamt

**EUROPÄISCHER RECHERCHENBERICHT**

0 115 608

Nummer der Anmeldung

EP 83 11 2697

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 634 638 (CLAAS) <br> * Seite 4, Absatz 6; Seite 5; Seite 6; Abbildungen 1-5 * | 1-3 | A 01 F 15/00 |
| Y | EP-A-0 064 117 (DEERE) <br> * Seite 6, Zeilen 2-39; Seite 10, Zeilen 1-28; Abbildungen 1-15 * | 1,2,4 | |
| A | FR-A-2 357 165 (SPERRY-RAND) <br> * Seite 3, Zeilen 23-37; Seite 4; Seite 5; Abbildungen 1,2,17-21 * | 1 | |

RECHERCHIERTE
SACHGEBIETE (Int. Cl. ³)

A 01 F

Der vorliegende Recherchenbericht wurde für alle Patentansprüche erstellt.

| Recherchenort | Abschlußdatum der Recherche | Prüfer |
|---|---|---|
| DEN HAAG | 05-04-1984 | VERMANDER R.H. |